# EUROPÄISCHE PATENTSCHRIFT

(11) **EP 0 784 065 B1**
(45) Veröffentlichungstag und Bekanntmachung des Hinweises auf die Patenterteilung: **03.04.2002**
(21) Anmeldenummer: 96120364.3
(22) Anmeldetag: 18.12.1996
(51) Int. Cl.: C08G 59/00, C09D 5/44, C08G 59/06

(54) **Aufbau von modifizierten Epoxidharzen für die kathodische Elektrotauchlackierung mit Katalysator-Desaktivierung und Diolmodifizierung**
Preparation of modified epoxy resins suitable for cathodic electrodeposition by deactivating the catalyst and diol modification
Préparation de résines époxydes modifiées aptes à l'électrodéposition cathodique par désactivation du catalyseur et modification avec un diol

(30) Priorität: 20.12.1995 DE 19547786
(43) Veröffentlichungstag der Anmeldung: 16.07.1997
(73) Patentinhaber: BASF Coatings Aktiengesellschaft, 48165 Münster (DE)
(72) Erfinder: Reuter, Hardy, Dr., 48167 Münster (DE); Jouck, Walter, Dr., 48167 Münster (DE); Ott, Günther, Dr., 48167 Münster (DE)
(74) Vertreter: Fitzner, Ulrich, Dr.

(56) Entgegenhaltungen:
- EP-A- 0 127 915
- EP-A- 0 235 990
- EP-A- 0 302 560
- EP-A- 0 493 916
- US-A- 4 358 578
- US-A- 4 698 141

## Beschreibung

Die Erfindung betrifft Epoxidharze zur Herstellung von in Wasser dispergierbaren
Bindemitteln für kathodisch abscheidbare Elektrotauchlacke, ein Verfahren zur Herstellung der Epoxidharze und die Verwendung der Epoxidharze als Bindemittel für Elektrotauchlackbäder. Die Erfindung betrifft auch ein Verfahren zum elektrophoretischen Beschichten eines elektrisch leitenden, als Kathode geschalteten Substrats, bei dem das Elektrotauchlackbad die besagten Epoxidharze enthält.

Kathodisch abscheidbare Kunstharze enthaltende Elektrotauchlacke und das kathodische Elektrotauchlackierverfahren, bei dem die kathodisch abscheidbare Kunstharze enthaltenden Elektrotauchlacke zur Anwendung kommen, sind hinreichend bekannt (vergleiche dazu zum Beispiel Glasurit Handbuch Lacke und Farben, Curt R. Vincentz Verlag, Hannover, 1984, Seiten 374-384 und Seiten 457-462, sowie DE-A-35 18 732, DE-A-35 18 770, EP-A-40 090, EP-A-12 463, EP-A-259 181, EP-A-433 783 und EP-A-262 069). Das Verfahren wird insbesondere zur Grundierung von Automobilkarosserien eingesetzt.
Die kathodisch abscheidbaren Kunstharze enthalten in der Regel stickstoffbasische Kunstharze, die bei Zusatz eines Vernetzungsmittels fremdvernetzend, oder auch selbstvernetzend oder unter Kondensation härtbar sind.

Diese stickstoffbasischen Kunstharze sind in vielen Fällen Umsetzungsprodukte von Epoxidharzen mit Aminen, wodurch eine Wasserdispergierbarkeit erzielt wird.

Der Aufbau dieser Epoxidharze erfolgt in der Regel durch Reaktionen von Epoxiden mit Phenolen und gegebenenfalls Alkoholen in Gegenwart eines Aminkatalysators, wobei oftmals Polyepoxide mit Polyphenolen und gegebenenfalls polyfunktionelle Alkohole und/oder Polyole unter Kettenverlängerung umgesetzt werden.
So werden in Gegenwart eines Aminkatalysators beispielsweise in der DE-4325094 und der DE-4332014 Epoxidharze auf Basis Bisphenol A unter Kettenverlängerung mit Monophenolen und Diphenolen umgesetzt.
Epoxiddharze, bei denen der Amin-katalysierte Aufbau durch Reaktion mit Alkoholen, wie Monoalkoholen, Diolen, polyfunktionellen Alkoholen und Polyolen, wie Polyesterdiolen oder Polyetherdiolen, erfolgt, sind in den Patentschriften EP-A-059 895, EP-A-154 724, DE-PS 27 01002, US-PS- 4 104 147, US-PS- 4 148 772, US-PS- 3 839 252, US-PS- 4 035 275, EP-A2-074 634 beschrieben. Durch die Modifizierung der Kunstharzen wird versucht, den Forderungen der Verbraucher nach niedrigeren Gehalten an organischen Lösemitteln, größeren Schichtdicken und elastifizierten Bindemitteln Rechnung zu tragen.

Prinzipiell sind für Anlagerungen von Epoxid an Phenol und Alkohol neben Aminen aber auch andere Katalysatoren bekannt, wie Phosphine , Alkalihydroxide , -iodide , Alkali- und Erdalkalimetallfluorborate, - antimonate und -perchlorate, die sich in ihrer Selektivität unterscheiden (US-PS- 3 477 990, US-PS 0189 480, US-PS 3 978 027, US-PS 4 358 578, DE 26 39 564 C2, DD 240 904 A1, DE 41 06 665 A1).

Ein wesentlicher Nachteil der Herstellung der Epoxidharze liegt in der mangelnden Kontrollierbarkeit der kettenverlängenden Reaktionen:

Bei der Umsetzung von Epoxiden (A) mit Alkoholen oder/und Phenolen (B) laufen nachfolgende Reaktionen ab:
1.) Öffnen des Oxiranrings durch Phenol oder Alkohol 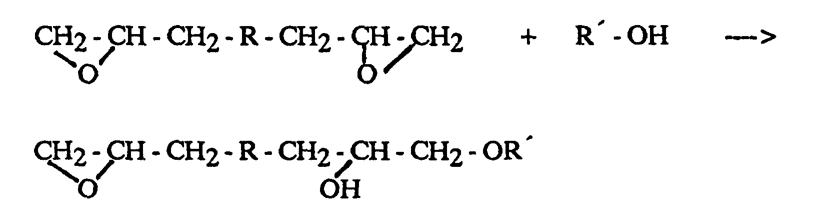
2.) Öffnen eines weiteren Oxiranrings durch die in 1. gebildete sekundäre Hydroxylgruppe (Verzweigungsreaktion)

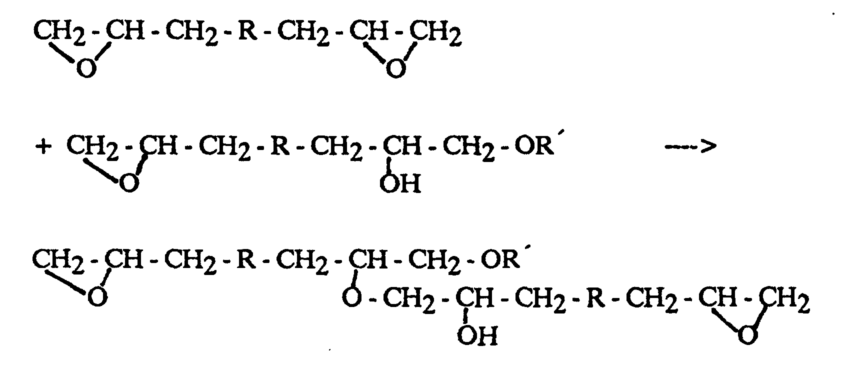

Neben der gewünschten Reaktion zwischen phenolischen Hydroxylgruppen, beispielsweise von Bisphenol A, oder polymeren Hydroxylgruppen, beispielsweise eines Polyetherdiols, mit Epoxygruppen kann die unter 2. beschriebene Reaktion der sekundären Hydroxylgruppe mit der Epoxygruppe ablaufen.
Diese beschriebene Reaktion wird sogar ausgenutzt, um verzweigte Epoxidharze zu bilden (DE-4325094 und DE-4332014).
Allerdings kann die Verzweigungsreaktion des Epoxidharzes ohne sorgfältige Überwachung zur Ausbildung zu hoher Viskositäten bis zur Gelierung des Harzes führen.

Problematisch erweist sich insbesondere das Abstoppen der Reaktion, da die Verzweigungsreaktion in der Regel durch Absenkung der Reaktionstemperatur unterbrochen wird. Während der Kühlphasen viskoser Medien kann die unkontrollierte Kettenverlängerung so nicht verhindert werden. Unter Zuhilfenahme von Ballastkühlung und/oder Vakuumsiedekühlung gelingt es, die Produkttemperatur viskoser Harze abzusenken, was aber die unkontrollierte Kettenverlängerung nicht verhindert und zusätzlich erhebliche Verfahrenszeiten erfordert. So treten besonders bei der industriellen Produktion diese beschriebenen Nachteile auf. Der Verzicht auf Ballastkühlung und/oder Vakuumsiedekühlung, angestrebt bei Lösungsmittel-freien Systemen, führt in der Regel zu nicht-tolerierbaren Verschlechterungen der Produkteigenschaften, da eine rasche Abkühlung im Produktionsmaßstab unmöglich ist.

Andererseits können während der Kettenverlängerung so viele Epoxygruppen verbraucht werden, daß ein Überschuß von Amin im Reaktionsprodukt verbleibt, der die Dispersions- und Applikationseigenschaften des entstandenen Harzes nachhaltig beeinträchtigt.

Bei Reaktion aliphatischen und/oder cycloaliphatischen Hydroxylverbindungen mit Epoxid kann die Effizienz der Umsetzung gering sein. Auch wenn in solchen Epoxidharz-Vorprodukten der Gehalt an Epoxygruppen nach angenommener Addition von Epoxy an einen Alkohol dem vorausberechneten theoretischen Gehalt entspricht, ist durch Eigenkondensation der Epoxidharze das Vorhandensein erheblicher Anteile freier Alkohole nicht auszuschließen aufgrund ihres unvollständigen Einbaus ins Harz.

In der Literatur belegt die hohe Produktvielfalt an entstehenden Epoxidharz-Oligomeren die geringe Selektivität der Amin-katalysierten Reaktion von Epoxid mit aliphatischen Hydroxylverbindungen. Es entstehen Nebenprodukte. Breite Molekulargewichtsverteilungen entstehen. Insbesondere beim Einbau von Alkoholen, wie Diolen, in Epoxidharze wird ein stärkerer Einfluß der Reaktionstemperatur auf deren Selektivität beobachtet, was unter anderem zu einem unterschiedlichen Gelierverhalten und insgesamt heterogeneren Netzwerken führt (W.Tänzer, J. Eisenschmidt, M.Fedke - Polymer Bulletin 20, 183-188 (1988); W. Tänzer, M.Szesztay, Zs. Laszlo-Hedvig, M. Fedke - Polymer Bulletin 20, 189-194 (1988); W. Tänzer, M.Szesztay, Zs. Laszlo-Hedvig, M. Fedke - Acta Polymerica 39 (1988) Nr. 12; 696-701).

Desweiteren werden während einer langen Lagerung von Epoxidharzen bei Raumtemperatur, welche zuvor durch Amin-katalysierte Kettenverlängerung aufgebaut wurden, weitere Epoxygruppen verbraucht.

Der Erfindung lag die Aufgabe zugrunde, ein Epoxidharz zur Herstellung wasserdispergierbarer Bindemittel für kathodisch abscheidbare Elektrotauchlacke aufzufinden, das mit verbesserter Reproduzierbarkeit hergestellt werden kann, und mit denen die eingangs geschilderten Mängel vermieden werden.

Diese Aufgabe wird erfindungsgemäß dadurch gelöst, daß das Epoxidharz herstellbar ist, indem
a) Polyepoxide mit mindestens einer Glycidgruppe pro Molekül der Epoxygruppen und Phenol-Gruppierungen
b) und ggfs. bis zu 60 Gew.-% bezogen auf das gesamte Epoxidharzreaktionsprodukt aliphatischen und/oder alicyclischen Hydroxylverbindungen mit bevorzugt zwei oder durchschnittlich kleiner zwei Hydroxylgruppen pro Molekül und einem Molgewicht kleiner 9000 g/mol,
c) in Gegenwart eines Katalysators der Kombination "hartes Kation-" nicht-nukleophiles" Anion, bestehend aus neutralen Metallsalzen, wie Alkali- und Erdalkali-, Zink- und Nickelsalze der Tetrafluorbor-, Tetrachlorbor-, Hexafluorantimon-, Hexachlorantimon-, Hexafluorphosphor-, Perchlor- und Periodsäure, umgesetzt werden und
d) ein Desaktivierungsmittel zugesetzt wird, welches die Weiterreaktion der Epoxygruppen verhindert, sobald die phenolischen Hydroxylgruppen bereits weitgehend abreagiert sind und mindestens noch 0,6 Gew.-% Epoxygruppen bezogen auf das Gesamtgewicht des Epoxidharzreaktionsprodukt vorhanden sind, wobei als Desaktivierungsmittel Metallhydroxide der I.-V. Hauptgruppe und II.-VIII. Nebengruppe des Perioden systems eingesetzt werden.

Vorzugsweise ist das Epoxidharz modifiziert durch Umsetzung
(A) eines Epoxidharzes
   und
(B) primärer, sekundärer und/oder tertiärer Amine,
wobei der Restgehalt an Epoxidgruppen in (A) für die Umsetzung mit den Aminen (Komponente B) so gewählt ist, daß eine hinreichende Wasserdispergierbarkeit gewährleistet ist. Das Reaktionsprodukt kann dann durch Behandeln mit Säuren wasserdispergierbar gemacht werden.

Als Epoxidharze können bei der vorliegenden Erfindung alle niedermolekularen sowie höhermolekularen Polymere verwendet werden, sofern sie im Mittel mehr als eine Epoxygruppe pro Molekül enthalten. Bevorzugt sind Epoxidverbindungen mit zwei oder mehr Epoxygruppen pro Molekül. Die bevorzugten Epoxide sind Polyglycidylether von cyclischen Polyolen. Die besonders bevorzugten Epoxide sind Polyglycidylether von Polyphenolen, wie Bisphenol-A oder Bisphenol F. Diese Polyepoxide können durch Veretherung eines Polyphenols mit einem Epihalogenhydrin oder einem Dihalogenhydrin, wie Epichlorhydrin oder Dichlorhydrin in Gegenwart von Alkali nach bekannter Weise hergestellt werden.
Beispiele von Polyphenolen sind 2,2-Bis(4-hydroxyphenyl)propan, 1,1-Bis-(4-hydroxyphenyl)ethan, 2-Methyl-1,1-bis(4-hydroxyphenyl)-propan, 2,2-Bis(4-hydroxy-3-tert-butylphenyl)propan, Bis-(2-hydroxynaphthyl)methan und 1,5-Dihydroxynaphthalin. Beispiele von anderen cyclischen Polyolen sind cycloaliphatische Polyole, wie 1,2-Cyclohexandiol, 1,4-Cyclohexandiol, 1,2-Bis(hydroxymethyl)cyclohexan, 1,3-Bis(hydroxymethyl)cyclohexan und hydriertes Bisphenol A. Darüber hinaus können oxyalkylierte Addukte, wie Ethylen- und Propylenoxidaddukte von diesen alicyclischen Polyolen und Polyphenolen verwendet werden.
Polyglycidylether von mehrwertigen Alkoholen, wie Ethylenglykol, Diethylenglykol, Triethylenglykol, 1,2-Propylenglykol, 1,3-Propylenglykol, 1,4-Butylenglykol und 1,5-Pentandiol können als Beispiele von anderen Epoxidharzen angesehen werden.
Eine andere geeignete Klasse von Epoxidharzen sind Polyglycidylether von phenolischen Novolakharzen oder ähnlichen Phenolharzen. Auch Epoxide, die man durch Epoxidierung einer olefinisch ungesättigten alicyclischen Verbindung erhält, sind bei der Erfindung brauchbar. Derartige Epoxidharze schließen Diepoxide oder höhere Epoxide und auch deren Mischungen ein, die eine oder mehrere Monoepoxide enthalten. Diese Epoxide sind nicht-phenolische und werden durch Epoxidierung von alicyclischen Olefinen erhalten, z.B. mit Sauerstoff und ausgewählten Metallkatalysatoren, mit Perverbindungen, wie beispielsweise Perbenzoesäure, mit Acetaldehydmonoperacetat oder Peressigsäure. Beispiele von solchen Epoxiden sind 1.5-Diepoxycyclooctan und Isomere des Cyclopentadiendioxids. In gleicher Weise gilt dies für die partielle Epoxidierung von Polydienen und deren Copolymeren. Beispiele sind teil-epoxidiertes Polybutadien und Polyisopren.

Als Phenole können Monophenole und/oder Polyphenole verwandt werden, wobei alkyl- und alkoxysubstituierte Phenole einbezogen sind. Beispiele für Monophenole sind Phenol, 2-Hydroxytoluol, 3-Hydroxytoluol, 4-Hydroxytoluol, 2- tert-Butylphenol, 4- tert-Butylphenol, 2-tert-Butyl-4-methylphenol, 2-Methoxyphenol, 4-Methoxyphenol, 2-Hydroxybenzylalkohol, 4-Hydroxybenzylalkohol, Nonylphenol, Dodecylphenol, 1-Hydroxynaphthalin, 2-Hydroxynaphthalin, Biphenyl-2-ol, Biphenyl-4-ol sowie 2-Allylphenol. Als typische Vertreter von Polyphenolen werden beispielsweise Bisphenol-A oder Bisphenol F angesehen. Weitere Polyphenole sind beispielsweise 1,4-Dihydroxybenzol, 1,3-Dihydroxybenzol, 1,2-Dihydroxybenzol, 2,2-Bis(4-hydroxyphenyl)-propan, 1,1-Bis-(4-hydroxyphenyl)ethan, 2-Methyl-1,1-bis(4-hydroxyphenyl)-propan, 2,2-Bis(4-hydroxy-3-tert-butylphenyl)propan, 4,4-Dihydroxybenzophenon, 2,4-Dihydroxybenzophenon, 1,4-Dihydroxynaphthalin, Bis-(2-hydroxynaphthyl)methan und 1,5-Dihydroxynaphthalin.

Das Aufbauverfahren aus einem Epoxidharz und einem Phenol, das dann zu dem Polyepoxid (a) führt, vollzieht sich über einen Reaktionstyp, der im Prinzip in der Technik bekannt ist, und der beispielsweise auch bei der Herstellung kommerzieller Epoxidharze vom Bisphenol A- oder Bisphenol F-Typ mitunter angewandt wird. Es findet dabei zwischen den Epoxygruppen und den phenolischen Hydroxylgruppen eine bei gewählter Katalyse weitgehend nebenreaktionsfreie Umsetzung statt. Dazu wird in typischer Weise ein Epoxidharz auf Basis Bisphenol A- oder F und ein Phenol in Gegenwart eines geeigneten Katalysators, wie Triphenylphosphin, oder eines Phosphoniumsalzes - zum Beispiel Ethyltriphenylphosphoniumiodid - umgesetzt. Dies kann in Abwesenheit (separat) oder gegebenenfalls Gegenwart der aliphatischen und/oder cycloaliphatischen Hydroxylverbindungen (in situ) geschehen bei Temperaturen von 80 bis 200°C, vorzugsweise 100 bis 150°C.

Zur Umsetzung mit aliphatischen und/oder cycloaliphatischen Hydroxylverbindungen eignen sich prinzipiell alle Monoalkohole, Diole, Triole und Polyole, wobei Temperaturen von 80 bis 200°C geeignet sind, vorzugsweise 100 bis 150°C.
Bei Verwendung für kathodische Elektrotauchlacke werden durch den Einbau der Hydroxylverbindungen Bindemittel erhalten, die sich durch eine zusätzliche Flexibilisierung auszeichnen. Daneben wird die Bildung dickerer Lackfilme gefördert, beziehungsweise die üblicherweise beobachtbare Einbuße in den Schichtdicken bei gleichzeitig niedrigeren nichtflüchtigen Anteil und/oder Verringerung des Weichmachergehalts kompensiert.
Geeignete Monoalkohole sind Methanol, Ethyl-, Propyl-, Isopropyl-, Butyl-, Isobutyl-, Amyl-, Isoamyl-, 2-Ethylbutyl-, Hexyl-, Heptyl-, Octyl-, 2-Ethylhexyl-, Nonyl-, 3,3,5-Trimethylhexyl- ,Isononyl-, Decyl-, Isodecyl-, Lauryl-, Isotridecyl-, Isohexadecyl-, Isooctadecyl- sowie Neopentylalkohol, 3,7-Dimethyl-3-octanol, 3-Cyclohexylpropanol, 2,4-Dimethylpentan-3-ol.
Ebenfalls sind ungesättigte Monoalkohole geeignet wie Allylalkohol, 1-Buten-3-ol, 2-Methylbuten-3-ol-2, 3-Methylpenten-1-ol-3, Crotylalkohol, 9-Decen-1-ol, Zimtalkohol und 9-Octadecen-1-ol.
Geeignete Alkohole sind weiterhin Benzylalkohol, 1-Phenylethanol, 2-Phenylethanol, 4-Methylbenzylalkohol, 2-Phenylpropanol-1, Diphenylcarbinol und Phenylmethylcarbinol.
Desweiteren sind cycloaliphatische Alkohole geeignet wie Cyclopentanol, Cyclohexanol und 4-tert-Butylcyclohexanol.
Geeignete Etheralkohole sind Methylglykol, Ethylglykol, Butylglykol, Methyl-, Ethyl- und Butyldiglykol, Methyl-, Ethyl- und Butyltriglykol, Methyl-, Ethyl- und Butylpolyglykol sowie Hexylglykol, Hexyldiglykol, Phenylglykol, Phenyldiglykol, Methoxypropanol, Methoxybutanol, Phenoxypropanol und Phenoxybutanol.

Neben den niedermolekularen Etheralkoholen werden Polyoxyalkylenmonoole entsprechend der allgemeinen Formel benutzt:

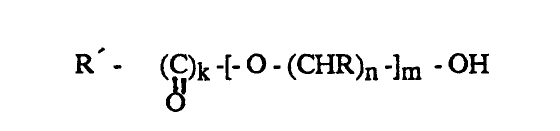

Darin ist R' ein Alkyl- , Aryl-, gemischt Alkyl-/Aryl- oder Alkoxyrest, gegebenenfalls mit Substituenten, wobei k = 0 oder 1 ist. R ist Wasserstoff oder ein niedriger Alkylrest, gegebenenfalls mit verschiedenen Substituente, wobei n = 1 bis 6 und m = 1 bis 50 oder noch höher ist. Beispiele sind Monoalkohole des Polyoxymethylens, Polyoxyethylens, Polyoxypropylens und Polyoxytetramethylens, wie sie beispielsweise Polyoxypropylene der Bezeichnung Tegomer ® H-3304 darstellen (Fa. Th. Goldschmidt AG). Daneben sind aber auch ethoxylierte oder propoxylierte Alkylphenole geeignet, wie zum Beispiel TRITON ® X-15, TRITON ® X-35 oder TRITON ® X-405 (Fa. Rohm and Haas) und PLASTILIT ® 3060 (Fa. BASF AG).
Die bevorzugten Molekulargewichte liegen im Bereich von 350 bis 6000 g/mol.

Neben Polyoxyalkylenglykolen sind monofunktionelle Oligomere mit endständiger Hydroxylgruppe auf der Basis von Polybutadien, Polyisopren, den Copolymeren von Butadien und Isopren, den Copolymeren von Butadien oder Isopren mit Styrol, den Copolymeren von Butadien, Isopren und Styrol, deren hydrierten oder teilhydrierten Polymeren geeignet, insbesondere Blockcopolymere der genannten Typen. Typische Vertreter sind KRATON ® HPVM-1101, 1202, KRATON ® HPVM-1301 (Fa. Shell).

Als Diole, die generell bevorzugt sind, werden Alkylenglykole wie Ethylenglykol, Diethylenglykol, Triethylenglykol, Tetraethylenglykol, Propylenglykol, Dipropylenglykol, Butylenglykol und Neopentylglykol verwendet. Ferner sind bevorzugt: Propan-1,2-diol, Propan-1,3-diol, Butan-1,4-diol, Butan-1,3-diol, 2-Butin-1,4-diol, Hexan-1,6-diol, Decan-1,10-diol, 1,4-Cyclohexandiol, 1,2-Cyclohexandiol, 1-Phenyl-1,2-ethandiol sowie Tetraphenyl-1,2-ethandiol.

Neben den niedermolekularen Diolen werden Polyoxyalkylenglykole entsprechend der allgemeinen Formel benutzt:

H-[-O-(CHR)ₙ-]ₘ-OH

R ist Wasserstoff oder ein niedriger Alkylrest, gegebenenfalls mit verschiedenen Substituenten, wobei n = 1 bis 6 und m = 3 bis 50 oder noch höher ist. Beispiele sind Polyoxymethylen-, Polyoxyethylen-, Polyoxypropylen- und Polyoxytetramethylenglykole, wie beispielsweise Polyoxyethylenglykol und Polyoxypropylenglykol PLURIOL ® E400, P900, P2000 (Fa. BASF AG). Daneben sind auch deren Copolymere, insbesondere Blockcopolymere, wie Blockcopolymere des Ethylenoxids und Propylenoxids, zum Beispiel PLURONIC ® PE3100, PE6100 (Fa. BASF AG), geeignet. Die bevorzugten Molekulargewichte liegen im Bereich von 350 bis 6800 g/mol.

Neben Polyoxyalkylenglykolen sind difunktionelle Oligomere mit endständigen Hydroxylgruppen auf der Basis von Polybutadien, Polyisopren, den Copolymeren von Butadien und Isopren, den Copolymeren von Butadien oder Isopren mit Styrol, den Copolymeren von Butadien, Isopren und Styrol, deren hydrierten oder teilhydrierten Polymeren geeignet, insbesondere Blockcopolymere der genannten Typen. Typische Vertreter sind R 45HT (Fa. Metallgesellschaft AGPB), KRATON ® HPVM-2202, KRATON ® WRC-91-102 (Fa. Shell).

Mehrwertige aliphatischen und/oder cycloaliphatische Hydroxylverbindungen eignen sich ebenfalls zur Herstellung des Epoxidharzreaktionsprodukts (A), wobei als Beispiele für solche Verbindungen Trimethylolpropan, 1,2,6-Hexantriol, Pentaerythrit, Dipentaerythrit, Tripentaerythrit, Polypentaerythrit, Methylglukosid, Saccharose und deren Umsetzungsprodukte mit Ethylen- oder Propylenoxid bzw. Mischungen, wie zum Beispiel ethoxyliertes oder propoxyliertes Trimethylolpropan (POLYOL® TP08, TP30; TS30, Fa. Perstorp Polyols), ethoxyliertes oder propoxyliertes Pentaerythrit (POLYOL® PP30, PP50, PS 50, Fa. Perstorp Polyols) angesehen werden.

Die Verzweigungsreaktionen und gegebenenfalls die Anlagerung aliphatischer und/oder cycloaliphatischer Hydroxylverbindungen (b) an das Polyepoxid (a) erfolgen in Gegenwart von neutralen Metallsalzen der Kombination "hartes" Kation - "nicht-nukleophiles" Anion. Als Gruppen solcher Katalysatoren (c) sind Alkali- und Erdalkali-, Zink- und Nickelsalze der Tetrafluorbor-, Tetrachlorbor-, Hexafluorantimon-, Hexachlorantimon-, Hexafluorphosphor-, Perchlor- und Periodsäure geeignet.

Als neutrale Metallsalze eignen sich vorzugsweise Alkali- und Erdalkali-, Zink- und Nickelperchlorate oder - fluoroborate. Besonders bevorzugt werden Erdalkali- und Zinkperchlorate.

Die Menge, in der die Katalysatoren erfindungsgemäß eingesetzt werden, kann innerhalb eines breiten Bereichs variieren. Die Katalysatoren (c) werden in Anteilen von 1 - 5200 Teilen bezogen auf den Anteil Perchlorat, vorzugsweise 100 - 1900 Teile pro eine Million Teile Polyepoxid (a) eingesetzt. In Gegenwart des Katalysators (c) wird das den Gegenstand der Erfindung bildende Verfahren so geführt, daß die Umsetzung bei einer Temperatur von 80 bis 200°C, vorzugsweise von 100 bis 150°C durchgeführt wird.
Die erfindungsgemäß verwendeten Katalysatoren (c) beschleunigen nicht nur die Verzweigungsreaktionen und gegebenenfalls die Anlagerung aliphatischer und/oder cycloaliphatischer Hydroxylverbindungen (b), sondern ergeben auch eine günstigere Molekularverteilung des Reaktionsprodukts, ohne daß unerwünschte Nebenprodukte entstehen. Diese unterschiedliche Selektivität gegenüber Amin-katalysierten Systemen führt zu einer veränderten Oligomerverteilung. Die höhere Selektivität der Metallsalz-katalysierten Reaktion zeigt sich unter anderem bei den hier beschriebenen Epoxidharzen im unterschiedlichen Gelierverhalten und der Bildung insgesamt homogenerer Netzwerke.
Der erfindungsgemäß gewählte Katalysator verbessert die Effizienz des Einbaus aliphatischer und/oder cycloaliphatischer Hydroxylverbindungen. Diese Unterschiede zur Amin-katalysierten Reaktion führen zu einem günsteren Applikationsverhalten der daraus gefertigten Elektrotauchlacke und beeinflussen die Eigenschaften des nach Einbrennung gebildeten Polymernetzwerks.

Um die Weiterreaktion der Verzweigungsreaktionen oder deren Geschwindigkeit wirksam an einem Punkt zu verringern, an dem die phenolischen Hydroxylgruppen bereits weitgehend abreagiert sind, und an dem mindestens noch 0,6 Gew.-% Epoxygruppen bezogen auf das Gesamtgewicht nichtflüchtiger Anteile des Epoxidharzes (A) vorhanden sind, wird erfindungswesentlich ein Desaktivierungsmittel (d) dem Reaktionsgemisch zugesetzt. Dies kann bei Temperaturen oberhalb 80°C erfolgen, bevorzugt oberhalb 100°C, besonders bevorzugt oberhalb 120°C, bei dem sonst ohne Zusatz eine rasche Weiterreaktion beobachtet werden kann.
Mit Zusatz des Desaktivierungsmittels werden die üblicherweise sich der Aufbaureaktion anschließenden Kühlschritte unproblematisch. Das heißt, eine rasche Abkühlung des Epoxidharzreaktionsprodukts (A) bei den bevorzugten Temperaturen für den Kettenaufbau von 100 bis 150°C ist nicht zwingend. So kann unter Bedingungen der industriellen Produktion auch ohne wirksame Herabsetzung der Reaktionstemperatur zum Beispiel durch Ballastkühlung oder Vakuumsiedekühlung eine einfache Steuerung des Molekülaufbaus erfolgen.
Als Desaktivierungsmittel werden Metallhydroxide der I. - V. Hauptgruppe und II. - VIII. Nebengruppe des Periodensystems eingesetzt. Beispiele für geeignete Metallhydroxide sind Lithium-, Natrium-, Kalium-, Caesium-, Magnesium-, Calcium-, Strontium-, Barium-, Aluminium-, Zinn-, Blei-, Bismuth-, Zink-, Chromium-, Mangan-, Eisen- und Nickelhydroxid.
Vorzugsweise werden Lithium-, Natrium-, Kalium-, Caesium-, Magnesium-, Calcium-, Strontium-, Bariumhydroxide verwendet, besonders bevorzugt Natrium- und Kaliumhydroxid. Vorteilhaft hierbei wirkt sich eine Zugabe der Metallhydroxide im dispersen oder gelösten Zustand aus, was aber nicht notwendige Voraussetzung für deren Einarbeitung ist. Besonders vorteilhaft ist eine Dispergierung oder Lösung in den für die weitere Anwendung von Elektrotauchlacken bevorzugten Lösungsmitteln und Weichmachern, wie Alkoholen, Etheralkoholen, zum Beispiel Butylglykol, und Weichmachern auf Basis von ethoxylierten- und propoxylierten Phenolen, wie zum Beispiel Plastilit 3060 (Propylenglykolverbindung, Fa. BASF).
Die Menge an Desaktivator kann stark variieren in Abhängigkeit vom spezifischen Desaktivator (d), Katalysator (c), Polyepoxid (a) und gegebenenfalls aliphatischer und/oder cycloaliphatischer Hydroxylverbindungen (b), den Reaktionsbedingungen und den Grad der Desaktivierung. Um eine Weiterreaktion oder deren Geschwindigkeit wirksam zu verringern, werden 0,5 bis 5,0 Mol, vorzugsweise 1,4 - 3,0 Mol Hydroxidionen der beschriebenen Metallhydroxide jeweils zu einem Mol "nicht-nukleophiler" Anionen, wie Tetrafluoroborat, Tetrachloroborat, Hexafluoroantimonat, Hexachloroantimonat, Hexafluorphosphat, Perchlorat und Periodat gegeben.

Für die Verwendung der erfindungsgemäßen Epoxidharzreaktionsprodukte (A) in wässrigen Systemen ist es notwendig, ionische Gruppen in die Harze einzuführen. So kann man durch geeignete Maßnahmen Säuregruppen einführen, die nach Neutralisation mit Aminen ein wasserlösliches Harz ergeben.

Für die weitverbreitete Elektrotauchlackierung metallischer Substrate wird bevorzugt die kathodische Elektrotauchlackierung eingesetzt. Hierbei trägt das Harz positive Ladungen.
Dazu wird das Epoxidharzreaktionsprodukt (A) mit Aminen (B) umgesetzt und durch anschließende Neutralisation mit Carbonsäuren die positiven Ladungen erzeugt.
Als Komponente (B) können primäre, sekundäre und tertiäre Amine oder Gemische aus diesen eingesetzt werden.
Primäre und sekundäre Amine können direkt an den Epoxidring angelagert werden. Tertiäre Amine können nur über eine weitere funktionelle Gruppe im Molekül eingebaut werden.
Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dgl.. Geeignet sind ebenfalls Alkanolamine, wie z.B. Methylethanolamin, Diethanolamin und dgl.. Ferner sind Dialkylaminoalkylamine, wie z.B. Dimethylaminoethylamin, Diethylaminopropylamin, Dimethylaminopropylamin und dgl. geeignet. Es können auch ketimingruppenhaltige Amine, wie z.B. das Methylisobutyldiketimin von Diethylentriamin eingesetzt werden. In den meisten Fällen werden niedermolekulare Amine verwendet, doch ist es auch möglich, höhermolekulare Monoamine anzuwenden. In gleicher Weise können auch Mischungen verwendet werden. Polyamine mit primären und sekundären Aminogruppen können in Form ihrer Ketimine mit den Epoxygruppen umgesetzt werden. Die Ketimine werden aus den Polyaminen in bekannter Weise hergestellt.
Die Amine können auch noch andere Gruppen enthalten, doch sollen diese die Umsetzung des Amins mit der Epoxidgruppe nicht stören und auch nicht zu einer Gelierung der Reaktionsmischung führen.

Bevorzugt werden primäre und sekundäre Amine als Komponente (B) eingesetzt.

Die Umsetzung des Amins mit dem epoxygruppenhaltigen Epoxidharzreaktionsprodukt (A) tritt häufig schon beim Vermischen der Materialien ein. Es kann aber gegebenenfalls eine Erwärmung auf erhöhte Temperaturen wünschenswert sein, z.B. auf 50 bis 150°C, doch sind Umsetzungen auch bei niedrigeren und höheren Temperaturen möglich.
Für die Umsetzung mit dem epoxygruppenhaltigen Epoxidharz (A) sollte mindestens eine solche Menge an Amin verwendet werden, daß das Harz einen kationischen Charakter annimmt, d.h. daß es unter dem Einfluß einer Spannung in dem Beschichtungsbad zur Kathode wandert, wenn es durch Zugabe einer Säure löslich gemacht worden ist.

Die für die Wasserverdünnbarkeit und elektrische Abscheidung erforderlichen Ladungen können durch Protonierung mit wasserlöslichen Säuren (z.B. Borsäure, Ameisensäure, Milchsäure, Propionsäure, bevorzugt Essigsäure) erzeugt werden. Im allgemeinen ist es nur erforderlich, so viel Säure zuzugeben, daß das Produkt in Wasser dispergiert werden kann. Es kann aber auch so viel Säure verwendet werden, daß der theoretische Neutralisationsgrad von 100% überschritten wird.
Eine weitere Möglichkeit zur Einführung kationischer Gruppen besteht in der Umsetzung von Epoxidgruppen mit Aminsalzen. Als Salz eines Amins kann das Salz eines tertiären Amins verwendet werden.
Der Aminanteil des Amin-Säuresalzes ist ein Amin, das unsubstituiert oder substituiert wie im Falle des Hydroxylamins sein kann, wobei diese Substituenten die Umsetzung mit der Epoxygruppe des Epoxidharzreaktionsprodukts (A) nicht stören sollen und die Reaktionsmischung nicht gelieren soll. Bevorzugte Amine sind tertiäre Amine, wie Dimethylethanolamin, Triethylamin, Trimethylamin, Triisopropylamin und dergleichen.
Die Amin-Säuresalzmischung wird durch Umsetzung des Amins mit der Säure in bekannter Weise erhalten. Es können auch Amin-Säure-Mischungen verwendet werden, obwohl sie in der Regel unter Bildung des Säuresalzes reagieren.

Die in den erfindungsgemäßen Elektrotauchlacken enthaltenen kathodisch abscheidbaren Kunstharze sind in der Regel entweder selbstvernetzend und/oder werden mit einem Vernetzungsmittel oder einer Mischung aus Vernetzungsmitteln kombiniert.

Selbstvernetzbare Kunstharze sind erhältlich, indem in die Kunstharzmoleküle reaktive Gruppen eingeführt werden, die unter Einbrennbedingungen miteinander reagieren. Beispielsweise können in hydroxyl- und/oder aminogruppenhaltige Kunstharze blockierte Isocyanatgruppen eingeführt werden, die unter Einbrennbedingungen deblockieren und unter Ausbildung von vernetzten Lackfilmen mit den Hydroxyl- bzw. Aminogruppen reagieren. Selbstvernetzbare Kunstharze können beispielsweise durch Umsetzung eines hydroxyl- und/oder aminogruppenhaltigen Kunstharzes mit einem teilblockierten Polyisocyanat, das im statistischen Mittel eine freie NCO-Gruppe pro Molekül enthält, erhalten werden.

Die erfindungsgemäßen Elektrotauchlacke können im Prinzip alle für Elektrotauchlacke geeigneten Vernetzungsmittel wie z.B. Phenoplaste, polyfunktionelle Mannichbasen, Melaminharze, Benzoguanaminharze, blockierte Polyisocyanate und aktivierte Estergruppen enthaltende Verbindungen enthalten. Vorzugsweise werden blockierte Polyisocyanate als Vernetzungsmittel eingesetzt. Es können bei der Erfindung beliebige Polyisocyanate benutzt werden, bei denen die Isocyanatgruppen umgesetzt worden sind, so daß das gebildete blockierte Polyisocyanat gegenüber Hydroxylgruppen und Aminogruppen bei Raumtemperatur beständig ist, bei erhöhter Temperatur, in der Regel im Bereich von etwa 90 bis etwa 300°C, aber reagiert. Bei der Herstellung der blockierten Isocyanate können beliebige, für die Vernetzung geeignete organische Di- oder Polyisocyanate, wie üblicherweise aliphatische, cycloaliphatische oder aromatische Isocyanate, verwendet werden. Diese können auch Präpolymere sein, die sich beispielsweise von einem Polyol einschließlich Polyetherpolyols oder Polyesterpolyols ableiten.
Die Isocyanate können mit allen bekannten Blockierungsmitteln, wie Alkoholen, Phenolen, Oximen, Lactamen, Alkanolaminen, sekundären Aminen und aromatischen Alkoholen blockiert werden, wie in eingangs zitierten Patentdokumenten bereits ausführlich beschrieben wird (DE-A- 35 18 732, DE-A- 5 18 770, EP-A-40 090, EP-A-12 463, EP-A-259 181, EP-A-433 783, EP-A-262 069).

Der nichtflüchtige Anteil der erfindungsgemäßen Elektrotauchlacke besteht zu 35 bis 100, vorzugsweise 35 bis 90 Gew.-% aus einem kathodisch abscheidbaren Kunstharz oder einer Mischung aus kathodisch abscheidbaren Kunstharzen, zu 0 bis 65, vorzugsweise 10 bis 65 Gew.-% aus Vernetzungsmittel.

Die erfindungsmäßen wäßrigen Elektrotauchlacke können neben den oben beschriebenen Komponenten auch noch weitere übliche Lackbestandteile wie z.B. organische Lösemittel, Pigmente, Füllstoffe, Netzmittel, Antikrateradditive usw. enthalten.

Der Feststoffgehalt der erfindungsgemäßen Elektrotauchlacke beträgt im allgemeinen 5 bis 40, vorzugsweise 10 bis 40, besonders bevorzugt 20 bis 40 Gewichtsprozent.

Die erfindungsgemäßen Elektrotauchlacke werden zum Lackieren elektrisch leitfähiger Substrate eingesetzt, bei dem
(1) das elektrisch leitfähige Substrat in einen wäßrigen Elektrotauchlack getaucht wird,
(2) das Substrat als Kathode geschaltet wird,
(3) durch Gleichstrom ein Film auf dem Substrat abgeschieden wird,
(4) das lackierte Substrat aus dem Elektrotauchlack entfernt wird und
(5) der abgeschiedene Lackfilm eingebrannt wird.

Das obenbeschriebene Verfahren ist bekannt und wird schon seit mehreren Jahren im großen Umfang eingesetzt (vergleiche auch die oben zitierten Patentdokumente). Die angelegte Spannung kann in einem großen Bereich schwanken und kann zum Beispiel zwischen 2 und 1000V liegen. Typischerweise wird aber mit Spannungen zwischen 50 und 500V gearbeitet. Die Stromdichte liegt in der Regel zwischen etwa 10 und 100 A/m². Im Verlauf der Abscheidung neigt die Stromdichte zum Abfallen. Sobald der Lackfilm auf dem Substrat abgeschieden ist, wird das lackierte Substrat aus dem Elektrotauchlack entfernt und abgespült. Danach wird der abgeschiedene Lackfilm eingebrannt. Die Einbrenntemperaturen liegen überlicherweise bei 90 bis 200°C, vorzugsweise bei 150 bis 180 C und die Einbrenndauer liegt im allgemeinen zwischen 10 und 60 min., vorzugsweise zwischen 15 und 30 min.

Mit dem obenbeschriebenen Verfahren können im Prinzip alle elektrisch leitfähigen Substrate lackiert werden. Als Beispiele für elektrisch leitfähige Substrate werden Substrate aus Metall, wie Stahl, Aluminium, Kupfer und dergleichen genannt.

Die Erfindung wird in den folgenden Beispielen näher erläutert. Alle Angaben über Teile und Prozentsätze sind Gewichtsangaben, falls nicht ausdrücklich etwas anderes festgestellt wird.

### 1. Herstellung von Vernetzungsmitteln A

### 1.1 Vernetzungsmittel A1

In einem Reaktor, der mit einem Rührer, Rückflußkühler, Innenthermometer und Inertgaseinleitung ausgestattet ist, werden 10462 Teile Isomere und höherfunktionelle Oligomere auf Basis von 4,4'-Diphenylmethandiisocyanat mit einem NCO-Equivalentgewicht von 135 g/eq (Lupranat ® M20S, Fa. BASF; NCO-Funktionalität ca. 2,7; Gehalt an 2,2'- und 2,4'-Diphenylmethandiisocyanat unter 5%) unter Stickstoffatmosphäre vorgelegt. Man gibt 20 Teile Dibutylzinndilaurat zu und tropft 9626 Teile Butyldiglykol mit einer solchen Geschwindigkeit zu, daß die Produkttemperatur unter 60°C bleibt. Gegebenenfalls muß gekühlt werden. Nach Ende der Zugabe wird die Temperatur weitere 60 min bei 60°C gehalten und ein NCO-Equivalentgewicht von 1120 g/eq bestimmt (bezogen auf Festanteile). Nach Anlösung in 7737 Teilen Methylisobutylketon und Zugabe von 24 Teilen Dibutylzinndilaurat werden 867 Teile geschmolzenes Trimethylolpropan in einer solchen Geschwindigkeit zugegeben, daß eine Produkttemperatur von 100°C nicht überschritten wird. Nach Zugabeende läßt man weitere 60 min nachreagieren. Bei der nachfolgenden Kontrolle sind keine NCO-Gruppen mehr nachweisbar. Man kühlt auf 65°C ab und verdünnt gleichzeitig mit 963 Teilen n-Butanol und 300 Teilen Methylisobutylketon. Der Feststoffgehalt liegt bei 70,1 % (1 h bei 130°C).

### 1.2 Vernetzungsmittel A2

In einem Reaktor, wie er im vorstehenden Beispiel beschrieben ist, werden unter Stickstoffatmosphäre 1464 Teile trimerisiertes Hexamethylendiisocyanat mit einem NCO-Equivalentgewicht von 191 g/eq ("Basonat® PLR 8638", Fa. BASF) und 510 Teile Methylisobutylketon unter Rühren auf 50°C erwärmt. Während 4 h werden nun 936 Teile Di-n-butylamin zugetropft. Die Temperatur wird dabei durch Kühlung unter 55°C gehalten. Die Vernetzungsmittellösung wird anschließend gekühlt und mit 90 Teilen n-Butanol verdünnt. Bei der anschließenden Kontrolle sind keine NCO-Gruppen nachweisbar. Der Feststoffgehalt liegt bei 79,8 % (1 h bei 130°C gemessen).

### 2. Herstellung eines Epoxidharzreaktionsprodukts

### 2.1 Aminkatalysiertes Epoxidharzreaktionsprodukt

### 2.1.1 Epoxidharzreaktionsprodukt B0

### (Vergleichsbeispiel zu der im Pkt. 2.2.1 beschriebenen Perchloratkatalyse mit nachfolgender Katalysatordesaktivierung (B1))

In einem Reaktor, der mit einem Rührer, Rückflußkühler, Innenthermometer und Inertgaseinleitung ausgestattet ist, werden 19160 Teile Epoxidharz auf Basis von Bisphenol A mit einen Epoxy-Equivalentgewicht (EEW) von 188 g/eq zusammen mit 4357 Teilen Bisphenol A, 4179 Teilen Dodecylphenol und 1392 Teilen Xylol unter Stickstoffatmosphäre und Rühren auf 130°C aufgeheizt.

Es werden 29 Teile Triphenylphosphin zugesetzt.
Der Ansatz wird 45 min bei 130°C gehalten, so daß die phenolischen Hydroxylgruppen vollständig abreagieren. Es wird ein EEW von 581 g/eq bestimmt (bezogen auf Festanteile).

Danach werden 81 Teile N,N-Dimethylbenzylamin zugegeben. Bei dieser Temperatur wird der Reaktionsansatz gehalten, bis das EEW einen Wert von 758 g/eq erreicht hat (bezogen auf Festanteile). Dann wird der Ansatz geteilt und die erste Hälfte des so hergestellten Epoxidharzreaktionsprodukts B0 abgelassen, welches möglichst rasch auf Raumtemperatur abgekühlt wurde.

Nach weiteren 180 min wird von dem im Reaktor verbliebenen Anteil ein EEW von 874 g/eq bestimmt - nach sich anschließenden 575 min ein EEW von 1300 g/eq. Unmittelbar nach der Probenentnahme kommt es zur Gelierung.

Die mit EEW 758g/eq bestimmten Probe, die zuvor dem Reaktor entnommen wurde, wurde unmittelbar nach Probennahme bei Raumtemperatur in Tetrahydrofuran gelöst, um mittels Ausschlußchromatographie (SEC) die zahlenmittlere und gewichtsmittlere Molmasse - bezogen auf eine Eichung mit Polystyrolstandards - zu ermitteln:

| | |
|---|---|
| Mn = 1610 g/mol | (SEC, bez. auf Polystyrol-Standards) |
| Mw/Mn = 4,8 | (SEC, bez. auf Polystyrol-Standards) |

In einem dem obigen Ansatz gegenüber modifizierten Gelieransatz wurde anstelle von Triphenylphosphin die Position N,N-Dimethylbenzylamin vorgezogen, um die Kettenaufbaureaktion zu starten. Auf die Zugabe von Triphenylphosphin selbst wurde verzichtet.
Es wurden bei 130°C in Abständen von 30 min Proben zur EEW-Bestimmung entnommen. Unmittelbar nach Erreichung des EEW 1250 g/eq (bezogen auf Festanteile) kommt es zur Gelierung des Vergleichsansatzes.

### 2.2 Perchloratkatalysiertes Epoxidharzreaktionsprodukt

### 2.2.1 Epoxidharzreaktionsprodukt B1

In einem Reaktor, der mit einem Rührer, Rückflußkühler, Innenthermometer und Inertgaseinleitung ausgestattet ist, werden 19160 Teile Epoxidharz auf Basis von Bisphenol A mit einen Epoxy-Equivalentgewicht (EEW) von 188 g/eq zusammen mit 4357 Teilen Bisphenol A, 4179 Teilen Dodecylphenol und 1392 Teilen Xylol unter Stickstoffatmosphäre und Rühren auf 130°C aufgeheizt.

Es werden 29 Teile Triphenylphosphin zugesetzt.
Der Ansatz wird 45 min bei 130°C gehalten, so daß die phenolischen Hydroxylgruppen vollständig abreagieren. Es wird ein EEW von 583 g/eq bestimmt (bezogen auf Festanteile).

Darauffolgend werden 40 Teile Magnesiumperchlorat-Dihydrat (Fluka Chemie AG) - bei Raumtemperatur gelöst in 191 Teilen Methylisobutylketon - zugesetzt und der Ansatz auf 130°C temperiert.

125 min nach Zugabe der Magnesiumperchlorat-Lösung wird der Ansatz halbiert. Es wird in beiden Teilen des Reaktionsansatzes ein EEW von 755 g/eq bestimmt (bezogen auf Festanteile).

Zur ersten Hälfte (14674 Teile) werden 8 Teile Kaliumhydroxid, bei Raumtemperatur gelöst in 319 Teilen Butylglykol, gegeben und bei 130°C gehalten. 300 min nach Zugabe der Kaliumhydroxid-Lösung wird das so hergestellte Epoxidharzreaktionsprodukt B1 abgelassen.
Es wird ein EEW von 757 g/eq ermittelt, so daß die Zahl der Epoxygruppen nahezu unverändert geblieben ist.

Von der zweiten Hälfte des auf 130°C temperierten Reaktionsansatzes, bei der keine Desaktivierung des Katalysators Magnesiumperchlorat erfolgt ist, wird nach 235 min ein EEW von 1070 g/eq bestimmt. Unmittelbar nach der Probennahme kommt es zur Gelierung des Reaktionsansatzes.

Die mit EEW 755g/eq bestimmten Probe, die zuvor dem Reaktor entnommen wurde, wurde unmittelbar nach Probennahme bei Raumtemperatur in Tetrahydrofuran gelöst, um mittels Ausschlußchromatographie (SEC) die zahlenmittlere und gewichtsmittlere Molmasse - bezogen auf eine Eichung mit Polystyrolstandards - zu ermitteln:

| | |
|---|---|
| Mn = 1520 g/mol | (SEC, bez. auf Polystyrol-Standards) |
| Mw/Mn = 2,7 | (SEC, bez. auf Polystyrol-Standards) |

In einem dem obigen Ansatz gegenüber modifizierten Gelieransatz wurde anstelle von Triphenylphosphin die Position Magnesiumperchlorat-Dihydrat, gelöst in Methylisobutylketon, vorgezogen, um die Kettenaufbaureaktion zu starten. Auf die Zugabe von Triphenylphosphin selbst und die Desaktivierung des Metallsalz-Katalysators wurde verzichtet.
Es wurden bei 130°C in Abständen von 30 min Proben zur EEW-Bestimmung entnommen. Unmittelbar nach Erreichung des EEW 710 g/eq (bezogen auf Festanteile) kommt es zur Gelierung des Vergleichsansatzes.

### 2.2.2 Epoxidharzreaktionsprodukt B2

In einem zum Beispiel 2.2.1 vergleichbaren Reaktor werden 20827 Teile Epoxidharz auf Basis von Bisphenol A mit einen Epoxy-Equivalentgewicht (EEW) von 188 g/eq zusammen mit 2963 Teilen Bisphenol A, 701 Teilen Butan-1,4-diol und 4542 Teilen Dodecylphenol unter Stickstoffatmosphäre und Rühren auf 130°C aufgeheizt.

Es werden 31 Teile Triphenylphosphin zugesetzt.
Der Ansatz wird 45 min bei 130°C gehalten, so daß die phenolischen Hydroxylgruppen abreagieren. Es wird in 428 g Reaktionsansatz eine Epoxygruppe bestimmt.

Darauffolgend werden 45 Teile Magnesiumperchlorat-Dihydrat (Fluka Chemie AG) - bei Raumtemperatur gelöst in 226 Teilen Methylisobutylketon - zugesetzt, der Ansatz auf 130°C temperiert und bis zu einem EEW von 747 g/eq aufgebaut (bezogen auf Festanteil). Danach wird der Reaktionsansatz mit 14 Teilen Natriumhydroxid, bei Raumtemperatur gelöst in 651 Teilen Butylglykol, versetzt und das so hergestellte Epoxidharzreaktionsprodukt B2 abgelassen.

### 2.2.3 Epoxidharzreaktionsprodukt B3

In einem zum Beispiel 2.2.1 vergleichbaren Reaktor werden 20658 Teile Epoxidharz auf Basis von Bisphenol A mit einen Epoxy-Equivalentgewicht (EEW) von 188 g/eq zusammen mit 929 Teilen Butan-1,4-diol, 4505 Teilen Dodecylphenol und 3005 Teilen Xylol unter Stickstoffatmosphäre und Rühren auf 130°C aufgeheizt.

Es werden 31 Teile Triphenylphosphin zugesetzt.
Der Ansatz wird 50 min bei 130°C gehalten, so daß die phenolischen Hydroxylgruppen abreagieren. Es wird in 312 g Reaktionsansatz eine Epoxygruppe bestimmt.

Darauffolgend werden 41 Teile Magnesiumperchlorat-Dihydrat (Fluka Chemie AG) - bei Raumtemperatur gelöst in 206 Teilen Methylisobutylketon - zugesetzt, der Ansatz auf 130°C temperiert und bis zu einem EEW von 762 g/eq aufgebaut (bezogen auf Festanteil). Danach wird der Reaktionsansatz mit 19 Teilen Kaliumhydroxid, bei Raumtemperatur gelöst in 606 Teilen Butylglykol, versetzt und das so hergestellte Epoxidharzreaktionsprodukt B3 abgelassen.

### 2.2.4 Epoxidharzreaktionsprodukt B4

In einem zum Beispiel 2.2.1 vergleichbaren Reaktor werden 20446 Teile Epoxidharz auf Basis von Bisphenol A mit einen Epoxy-Equivalentgewicht (EEW) von 188 g/eq, zusammen mit 3686 Teile Bisphenol A, 382 Teilen Hexan-1,6-diol und 4459 Teilen Dodecylphenol unter Stickstoffatmosphäre und Rühren auf 130°C aufgeheizt.

Es werden 31 Teile Triphenylphosphin zugesetzt.
Der Ansatz wird 45 min bei 130°C gehalten, so daß die phenolischen Hydroxylgruppen abreagieren. Es wird in 485 g Reaktionsansatz eine Epoxygruppe bestimmt.

Darauffolgend werden 44 Teile Magnesiumperchlorat-Dihydrat (Fluka Chemie AG) - bei Raumtemperatur gelöst in 221 Teilen Methylisobutylketon - zugesetzt, der Ansatz auf 130°C temperiert und bis zu einem EEW von 767 g/eq (bezogen auf Festanteil) aufgebaut. Danach wird der Reaktionsansatz mit 20 Teilen Kaliumhydroxid, bei Raumtemperatur gelöst in 711 Teilen Butylglykol, versetzt und das so hergestellte Epoxidharzreaktionsprodukt B4 abgelassen.

### 2.2.5 Epoxidharzreaktionsprodukt B5

In einem zum Beispiel 2.2.1 vergleichbaren Reaktor werden 20343 Teile Epoxidharz auf Basis von Bisphenol A mit einen Epoxy-Equivalentgewicht (EEW) von 188 g/eq, zusammen mit 3667 Teile Bisphenol A, 380 Teilen Neopentylglykol und 4436 Teilen Dodecylphenol unter Stickstoffatmosphäre und Rühren auf 130°C aufgeheizt.

Es werden 30 Teile Triphenylphosphin zugesetzt.

Der Ansatz wird 60 min bei 130°C gehalten, so daß die phenolischen Hydroxylgruppen abreagieren. Es wird in 492 g Reaktionsansatz eine Epoxygruppe bestimmt.

Darauffolgend werden 68 Teile Magnesiumperchlorat-Dihydrat (Fluka Chemie AG) - bei Raumtemperatur gelöst in 338 Teilen Methylisobutylketon - zugesetzt, der Ansatz auf 130°C temperiert und bis zu einem EEW von 766 g/eq (bezogen auf Festanteil) aufgebaut. Danach wird der Reaktionsansatz mit 30 Teilen Kaliumhydroxid, bei Raumtemperatur gelöst in 708 Teilen Butylglykol, versetzt und das so hergestellte Epoxidharzreaktionsprodukt B5 abgelassen.

### 2.2.6 Epoxidharzreaktionsprodukt B6

In einem zum Beispiel 2.2.1 vergleichbaren Reaktor werden 20325 Teile Epoxidharz auf Basis von Bisphenol A mit einen Epoxy-Equivalentgewicht (EEW) von 188 g/eq, zusammen mit 3664 Teile Bisphenol A, 557 Teilen Phenoxypropan-2,3-diol und 4433 Teilen Dodecylphenol unter Stickstoffatmosphäre und Rühren auf 130°C aufgeheizt.

Es werden 30 Teile Triphenylphosphin zugesetzt.
Der Ansatz wird 60 min bei 130°C gehalten, so daß die phenolischen Hydroxylgruppen abreagieren. Es wird in 491 g Reaktionsansatz eine Epoxygruppe bestimmt.

Darauffolgend werden 44 Teile Magnesiumperchlorat-Dihydrat (Fluka Chemie AG) - bei Raumtemperatur gelöst in 221 Teilen Methylisobutylketon - zugesetzt, der Ansatz auf 130°C temperiert und bis zu einem EEW von 775 g/eq (bezogen auf Festanteil) aufgebaut. Danach wird der Reaktionsansatz mit 20 Teilen Kaliumhydroxid, bei Raumtemperatur gelöst in 706 Teilen Butylglykol, versetzt und das so hergestellte Epoxidharzreaktionsprodukt B6 abgelassen.

### 3. Herstellung einer wäßrigen Dispersion, die ein kathodisch abscheidbares Kunstharz und eine Mischung aus Vernetzungsmitteln enthält

### 3.1 Dispersion C0

### (Vergleichsbeispiel zu der im Pkt. 3.2 beschriebenen Dispersion nach Perchloratkatalyse mit nachfolgender Katalysatordesaktivierung (C1))

Im unter Punkt 2.1.1 hergestellten und anschließend aus dem Reaktor unter Kühlung abgelassenen Epoxidharzreaktionsprodukt B0 wurde ein Anstieg des Epoxidequivalentgewichts um 38g/eq festgestellt. Daraufhin wurde das Epoxidharzreaktionsprodukt B0 verworfen.

Statt dessen wird erneut der Kettenaufbau, wie unter Punkt 2.1.1 beschrieben, in einem Reaktor, der mit einem Rührer, Rückflußkühler, Innenthermometer und Inertgaseinleitung ausgestattet ist, vorgenommen. Dazu werden 3623 Teile Epoxidharz auf Basis von Bisphenol A mit einen Epoxy-Equivalentgewicht (EEW) von 188 g/eq zusammen mit 824 Teilen Bisphenol A, 790 Teilen Dodecylphenol und 263 Teilen Xylol unter Stickstoffatmosphäre und Rühren auf 130°C aufgeheizt.

Es werden 6 Teile Triphenylphosphin zugesetzt.

Der Ansatz wird 45 min bei 130°C gehalten, so daß die phenolischen Hydroxylgruppen vollständig abreagieren. Es wird ein EEW von 582 g/eq bestimmt (bezogen auf Festanteile).

Danach werden 15 Teile N,N-Dimethylbenzylamin zugegeben. Bei dieser Temperatur wird der Reaktionsansatz gehalten, bis das EEW einen Wert von 758 g/eq erreicht hat (bezogen auf Festanteile). Das Epoxidharzreaktionsprodukts B0 wird nicht isoliert, sondern unverzüglich auf 115°C abgekühlt unter gleichzeitiger Zugabe von 607 Teilen sec-Butanol und 120 Teilen Butylglykol.
Anschließend werden 475 Teile Diethanolamin zugesetzt und weiter auf 90°C abgekühlt. Eine Stunde nach Aminzugabe setzt man 577 Teile Plastilit 3060 (Propylenglykolverbindung, Fa. BASF) zu, verdünnt mit einem Gemisch von 213 Teilen sec-Butanol und 163 Teilen Propylenglycolphenylether und kühlt gleichzeitig rasch auf 65°C ab. Danach gibt man 154 Teile N,N-Dimethylaminopropylamin zu, hält die Temperatur eine halbe Stunde und erwärmt anschließend auf 90°C. Diese Temperatur wird für 1,5 Stunden beibehalten. Dann wird auf 70°C abgekühlt. Zum Reaktionsgemisch werden 2232 Teile Vernetzungsmittel A1 (Punkt 1.1) und 1953 Teile Vernetzungsmittel A2 (Punkt 1.2) und 36 Teile Methylisobutylketon zugesetzt, 10 min homogenisiert und in ein Dispergiergefäß überführt. Dort gibt man portionsweise unter Rühren 386 Teile Milchsäure (88%ig in Wasser) in 6746 Teilen deionisiertem Wasser zu. Anschließend wird 20 min homogenisiert, bevor mit weiteren 10817 Teilen entionisiertem Wasser in kleinen Portionen weiter verdünnt wird.

Durch Destillation im Vakuum werden die flüchtigen Lösemittel entfernt und anschließend mengengleich durch deionisiertes Wasser ersetzt. Die Dispersion besitzt folgende Kennzahlen:

| | |
|---|---|
| Feststoffgehalt | 31,9 % (1 Std. bei 130°C) |
| Basengehalt | 0,80 Milliequivalente/g Festkörper |
| Säuregehalt | 0,29 Milliequivalente/g Festkörper |
| pH | 6,2 |

### 3.2 Dispersion C1

Vom Epoxidharzreaktionsprodukt B1 wurde unmittelbar vor Einsatz das EEW bestimmt. Es konnte keine signifikante Veränderung des EEW's gegenüber dem Zeitpunkt der Zugabe des Desaktivierungsmittels festgestellt werden.
In einem Reaktor, der mit einem Rührer, Rückflußkühler, Innenthermometer und Inertgaseinleitung ausgestattet ist, werden 5677 Teile Epoxidharzreaktionsprodukt B1 mit 607 Teilen sec-Butanol gemischt und auf 115°C aufgeheizt.
Anschließend werden 475 Teile Diethanolamin zugesetzt und weiter auf 90°C abgekühlt. Eine Stunde nach Aminzugabe setzt man 577 Teile Plastilit 3060 (Propylenglykolverbindung, Fa. BASF) zu, verdünnt mit einem Gemisch von 213 Teilen sec-Butanol und 163 Teilen Propylenglycolphenylether und kühlt gleichzeitig rasch auf 65°C ab. Danach gibt man 154 Teile N,N-Dimethylaminopropylamin zu, hält die Temperatur eine halbe Stunde und erwärmt anschließend auf 90°C. Diese Temperatur wird für 1,5 Stunden beibehalten. Dann wird auf 70°C abgekühlt. Zum Reaktionsgemisch werden 2232 Teile Vernetzungsmittel A1 (Punkt 1.1) und 1953 Teile Vernetzungsmittel A2 (Punkt 1.2) zugesetzt, 10 min homogenisiert und in ein Dispergiergefäß überführt. Dort gibt man portionsweise unter Rühren 386 Teile Milchsäure (88%ig in Wasser) in 6746 Teilen deionisiertem Wasser zu. Anschließend wird 20 min homogenisiert, bevor mit weiteren 10817 Teilen entionisiertem Wasser in kleinen Portionen weiter verdünnt wird.

Durch Destillation im Vakuum werden die flüchtigen Lösemittel entfernt und anschließend mengengleich durch deionisiertes Wasser ersetzt. Die Dispersion besitzt folgende Kennzahlen:

| | |
|---|---|
| Feststoffgehalt | 31,8 % (1 Std. bei 130°C) |
| Basengehalt | 0,79 Milliequivalente/g Festkörper |
| Säuregehalt | 0,29 Milliequivalente/g Festkörper |
| pH | 6,2 |

### 3.3 Dispersion C2

Vom Epoxidharzreaktionsprodukt B2 wurde unmittelbar vor Einsatz das EEW bestimmt. Es konnte keine signifikante Veränderung des EEW's gegenüber dem Zeitpunkt der Zugabe des Desaktivierungsmittels festgestellt werden.
In einem zum Beispiel 3.2 vergleichbaren Reaktor werden 5525 Teile Epoxidharzreaktionsprodukt B2 unter Rühren auf 130°C aufgeheizt. Es erfolgt rasch die Zugabe von 2068 Teilen Vernetzungsmittel A1 (Punkt 1.1). Der Ansatz wird auf 90°C temperiert und eine Stunde nach Vernetzerzugabe 1001 Teile sec-Butanol zugesetzt. Anschließend werden 493 Teile Diethanolamin hinzugegeben und weiter auf 90°C gehalten. Eine Stunde nach Aminzugabe erfolgt die Zugabe von 179 Teilen Plastilit 3060 (Propylenglykolverbindung, Fa. BASF). Man verdünnt mit einem Gemisch aus 327 Teilen sec-Butanol und 168 Teilen Propylenglycolphenylether und kühlt gleichzeitig rasch auf 65°C ab. Danach gibt man 134 Teile N,N-Dimethylaminopropylamin zu, hält die Temperatur eine halbe Stunde und erwärmt anschließend auf 90°C. Diese Temperatur wird für 1,5 Stunden beibehalten. Dann wird auf 70°C abgekühlt. Zum Reaktionsgemisch werden 1810 Teile Vernetzungsmittel A2 (Punkt 1.2) zugesetzt, 10 min homogenisiert und in ein Dispergiergefäß überführt. Dort gibt man portionsweise unter Rühren 449 Teile Milchsäure (88%ig in Wasser) in 6008 Teilen deionisiertem Wasser zu. Anschließend wird 20 min homogenisiert, bevor mit weiteren 11838 Teilen entionisiertem Wasser in kleinen Portionen weiter verdünnt wird.

Durch Destillation im Vakuum werden die flüchtigen Lösemittel entfernt und anschließend mengengleich durch deionisiertes Wasser ersetzt. Die Dispersion besitzt folgende Kennzahlen:

| | |
|---|---|
| Feststoffgehalt | 30,3 % (1 Std. bei 130°C) |
| Basengehalt | 0,76 Milliequivalente/g Festkörper |
| Säuregehalt | 0,33 Milliequivalente/g Festkörper |
| pH | 5,8 |

### 3.4 Dispersion C3

Vom Epoxidharzreaktionsprodukt B3 wurde unmittelbar vor Einsatz das EEW bestimmt. Es konnte keine signifikante Veränderung des EEW's gegenüber dem Zeitpunkt der Zugabe des Desaktivierungsmittels festgestellt werden.

In einem zum Beispiel 3.2 vergleichbaren Reaktor werden 5156 Teile Epoxidharzreaktionsprodukt B3 mit 342 Teilen sec-Butanol gemischt und auf 115°C aufgeheizt. Anschließend werden 403 Teile Diethanolamin zugesetzt und weiter auf 90°C abgekühlt. Eine Stunde nach Aminzugabe setzt man 509 Teile Plastilit 3060 (Propylenglykolverbindung, Fa. BASF) zu, verdünnt mit einem Gemisch aus 189 Teilen sec-Butanol und 146 Teilen Propylenglycolphenylether und kühlt gleichzeitig rasch auf 65°C ab. Danach gibt man 151 Teile N,N-Dimethylaminopropylamin zu, hält die Temperatur eine halbe Stunde und erwärmt anschließend auf 90°C. Diese Temperatur wird für 1,5 Stunden beibehalten. Dann wird auf 75°C abgekühlt. Zum Reaktionsgemisch werden 1975 Teile Vernetzungsmittel A1 (Punkt 1.1) und 1728 Teile Vernetzungsmittel A2 (Punkt 1.2) zugesetzt, 10 min homogenisiert und in ein Dispergiergefäß überführt. Dort gibt man portionsweise unter Rühren 383 Teile Milchsäure (88%ig in Wasser) in 5680 Teilen deionisiertem Wasser zu. Anschließend wird 20 min homogenisiert, bevor mit weiteren 13338 Teilen entionisiertem Wasser in kleinen Portionen weiter verdünnt wird.

Durch Destillation im Vakuum werden die flüchtigen Lösemittel entfernt und anschließend mengengleich durch deionisiertes Wasser ersetzt. Die Dispersion besitzt folgende Kennzahlen:

| | |
|---|---|
| Feststoffgehalt | 27,8% (1 Std. bei 130°C) |
| Basengehalt | 0,78 Milliequivalente/g Festkörper |
| Säuregehalt | 0,36 Milliequivalente/g Festkörper |
| pH | 6,2 |

### 3.5 Dispersion C4

Vom Epoxidharzreaktionsprodukt B4 wurde unmittelbar vor Einsatz das EEW bestimmt. Es konnte keine signifikante Veränderung des EEW's gegenüber dem Zeitpunkt der Zugabe des Desaktivierungsmittels festgestellt werden.
In einem zum Beispiel 3.2 vergleichbaren Reaktor werden 5568 Teile Epoxidharzreaktionsprodukt B4 mit 924 Teilen sec-Butanol gemischt und auf 115°C aufgeheizt. Anschließend werden 487 Teile Diethanolamin zugesetzt und weiter auf 90°C abgekühlt. Eine Stunde nach Aminzugabe setzt man 391 Teile Plastilit 3060 (Propylenglykolverbindung, Fa. BASF) zu, verdünnt mit einem Gemisch aus 324 Teilen sec-Butanol und 185 Teilen Propylenglycolphenylether und kühlt gleichzeitig rasch auf 65°C ab. Danach gibt man 126 Teile N,N-Dimethylaminopropylamin zu, hält die Temperatur eine halbe Stunde und erwärmt anschließend auf 90°C. Diese Temperatur wird für 1,5 Stunden beibehalten. Dann wird auf 75°C abgekühlt. Zum Reaktionsgemisch werden 2277 Teile Vernetzungsmittel A1 (Punkt 1.1) und 1992 Teile Vernetzungsmittel A2 (Punkt 1.2) zugesetzt, 10 min homogenisiert und in ein Dispergiergefäß überführt. Dort gibt man portionsweise unter Rühren 363 Teile Milchsäure (88%ig in Wasser) in 6546 Teilen deionisiertem Wasser zu. Anschließend wird 20 min homogenisiert, bevor mit weiteren 10817 Teilen entionisiertem Wasser in kleinen Portionen weiter verdünnt wird.

Durch Destillation im Vakuum werden die flüchtigen Lösemittel entfernt und anschließend mengengleich durch deionisiertes Wasser ersetzt. Die Dispersion besitzt folgende Kennzahlen:

| | |
|---|---|
| Feststoffgehalt | 32,0% (1 Std. bei 130°C) |
| Basengehalt | 0,73 Milliequivalente/g Festkörper |
| Säuregehalt | 0,25 Milliequivalente/g Festkörper |
| pH | 6,0 |

### 3.6 Dispersion C5

Vom Epoxidharzreaktionsprodukt B5 wurde unmittelbar vor Einsatz das EEW bestimmt. Es konnte keine signifikante Veränderung des EEW's gegenüber dem Zeitpunkt der Zugabe des Desaktivierungsmittels festgestellt werden.
In einem zum Beispiel 3.2 vergleichbaren Reaktor werden 5459 Teile Epoxidharzreaktionsprodukt B5 mit 905 Teilen sec-Butanol gemischt und auf 115°C aufgeheizt. Anschließend werden 477 Teile Diethanolamin zugesetzt und weiter auf 90°C abgekühlt. Eine Stunde nach Aminzugabe setzt man 575 Teile Plastilit 3060 (Propylenglykolverbindung, Fa. BASF) zu, verdünnt mit einem Gemisch aus 317 Teilen sec-Butanol und 181 Teilen Propylenglycolphenylether und kühlt gleichzeitig rasch auf 65°C ab. Danach gibt man 123 Teile N,N-Dimethylaminopropylamin zu, hält die Temperatur eine halbe Stunde und erwärmt anschließend auf 90°C. Diese Temperatur wird für 1,5 Stunden beibehalten. Dann wird auf 75°C abgekühlt. Zum Reaktionsgemisch werden 2231 Teile Vernetzungsmittel A1 (Punkt 1.1) und 1952 Teile Vernetzungsmittel A2 (Punkt 1.2) zugesetzt, 10 min homogenisiert und in ein Dispergiergefäß überführt. Dort gibt man portionsweise unter Rühren 391 Teile Milchsäure (88%ig in Wasser) in 6572 Teilen deionisiertem Wasser zu. Anschließend wird 20 min homogenisiert, bevor mit weiteren 10817 Teilen entionisiertem Wasser in kleinen Portionen weiter verdünnt wird.

Durch Destillation im Vakuum werden die flüchtigen Lösemittel entfernt und anschließend mengengleich durch deionisiertes Wasser ersetzt. Die Dispersion besitzt folgende Kennzahlen:

| | |
|---|---|
| Feststoffgehalt | 32,0 % (1 Std. bei 130°C) |
| Basengehalt | 0,72 Milliequivalente/g Festkörper |
| Säuregehalt | 0,25 Milliequivalente/g Festkörper |
| pH | 6,0 |

### 3.7 Dispersion C6

Vom Epoxidharzreaktionsprodukt B6 wurde unmittelbar vor Einsatz das EEW bestimmt. Es konnte keine signifikante Veränderung des EEW's gegenüber dem Zeitpunkt der Zugabe des Desaktivierungsmittels festgestellt werden.
In einem zum Beispiel 3.2 vergleichbaren Reaktor werden 5341 Teile Epoxidharzreaktionsprodukt B6 mit 881 Teilen sec-Butanol gemischt und auf 115°C aufgeheizt. Anschließend werden 465 Teile Diethanolamin zugesetzt und weiter auf 90°C abgekühlt. Eine Stunde nach Aminzugabe setzt man 186 Teile Plastilit 3060 (Propylenglykolverbindung, Fa. BASF) zu, verdünnt mit einem Gemisch aus 309 Teilen sec-Butanol und 176 Teilen Propylenglycolphenylether und kühlt gleichzeitig rasch auf 65°C ab. Danach gibt man 120 Teile N,N-Dimethylaminopropylamin zu, hält die Temperatur eine halbe Stunde und erwärmt anschließend auf 90°C. Diese Temperatur wird für 1,5 Stunden beibehalten. Dann wird auf 75°C abgekühlt. Zum Reaktionsgemisch werden 2171 Teile Vernetzungsmittel A1 (Punkt 1.1) und 1900 Teile Vernetzungsmittel A2 (Punkt 1.2) zugesetzt, 10 min homogenisiert und in ein Dispergiergefäß überführt. Dort gibt man portionsweise unter Rühren 364 Teile Milchsäure (88%ig in Wasser) in 6070 Teilen deionisiertem Wasser zu. Anschließend wird 20 min homogenisiert, bevor mit weiteren 12017 Teilen entionisiertem Wasser in kleinen Portionen weiter verdünnt wird.

Durch Destillation im Vakuum werden die flüchtigen Lösemittel entfernt und anschließend mengengleich durch deionisiertes Wasser ersetzt. Die Dispersion besitzt folgende Kennzahlen:

| | |
|---|---|
| Feststoffgehalt | 30,0 % (1 Std. bei 130°C) |
| Basengehalt | 0,75 Milliequivalente/g Festkörper |
| Säuregehalt | 0,27 Milliequivalente/g Festkörper |
| pH | 6,1 |

### 4. Herstellung einer grauen Pigmentpaste

Gemäß EP 0 505 445 B1, Beispiel 1.3, wird eine organisch-wässrige Reibharzlösung hergestellt, indem man in der ersten Stufe 2598 Teile Bisphenol-A-diglycidylether (Epoxyequivalentgewicht [EEW] 188 g/eq), 787 Teile Bisphenol-A, 603 Teile Dodecylphenol und 206 Teile Butylglykol in Gegenwart von 4 Teilen Triphenylphosphin bei 130°C bis zu einem EEW von 865 reagieren läßt. Während des Abkühlens wird mit 849 Teilen Butylglykol und 1534 Teilen D.E.R. 732 (Polypropylenglykoldiglycidylether, DOW Chemikal) verdünnt und bei 90°C mit 266 Teilen 2,2'-Aminoethoxyethanol und 212 Teilen N,N-Dimethylaminopropylamin weiterreagiert. Nach 2 Stunden ist die Viskosität der Harzlösung konstant (5,3 dPa·s; 40%ig in Solvenon PM [BASF AG]; Platte-Kegel-Viskosimeter bei 23°C). Man verdünnt mit 1512 Teilen Butylglykol und teilneutralisiert die Basengruppen mit 201 Teilen Eisessig, verdünnt weiter mit 1228 Teilen entionisiertem Wasser und trägt aus. Man erhält so eine 60%ige wässrig-organische Harzlösung, deren 10%ige Verdünnung einen pH von 6,0 aufweist. Die Harzlösung wird in direkter Form zur Pastenherstellung eingesetzt.

Dazu werden zunächst 280 Teile Wasser und 250 Teile der vorstehend beschriebenen Harzlösung vorgemischt. Nun werden 5 Teile Ruß, 35 Teile basisches Bleipigment, 90 Teile Extender HEWP¹⁾, 315 Teile Titandioxid (R 900), 5 Teile Bentone EW²⁾ und 20 Teile Dibutylzinnoxid zugegeben. Die Mischung wird 30 min lang unter einem schnellaufenden Dissolverrührwerk vordispergiert. Anschließend wird die Mischung in einer Laborkleinmühle (Motor Mini Mill, Eiger Engineering Ltd., Great Britain) während 1 bis 1,5 h bis zu einer Hegmann-Feinheit von kleiner/gleich 12 dispergiert und mit weiterem Wasser auf Verarbeitungsviskosität eingestellt.
Es wird eine entmischungsstabile Pigmentpaste erhalten.
1) English China Clay Int., Great Britain
2) Rheox, Deutschland

### 5. Herstellung und Abscheidung erfindungsgemäßer Elektrotauchlacke I-VI

### 5.1 Herstellung der Elektrotauchlackbäder

Es werden von Dispersionen gemäß Punkt 3. nachfolgende Elektrotauchlackbäder I-VI, bestehend aus Mischungen von jeweils
(0) 2614 Teilen der Dispersion C0 (Pkt. 3.1) bzw.
(I) 2614 Teilen der Dispersion C1 (Pkt. 3.2) bzw.
(II) 2744 Teilen der Dispersion C2 (Pkt. 3.3) bzw.
(III) 2991 Teilen der Dispersion C3 (Pkt. 3.4) bzw.
(IV) 2598 Teilen der Dispersion C4 (Pkt. 3.5) bzw.
(V) 2598 Teilen der Dispersion C5 (Pkt. 3.6) bzw.
(VI) 2771 Teilen der Dispersion C6 (Pkt. 3.7)
und 1300 Teilen deionisiertem Wasser sowie 25 Teilen einer 10 %igen wäßrigen Milchsäurelösung hergestellt.
Zu den so entstandenen Mischungen werden 646 Teile der Pigmentpaste gemäß Punkt 4. unter Rühren zugesetzt. Der so erhaltene Elektrotauchlack wird mit deionisiertem Wasser auf 5000 Teile aufgefüllt.

### 5.2 Abscheidung der Elektrotauchlackbäder

Nach 10 Tagen Alterung bei Raumtemperatur wird auf einer kathodisch geschalteten Stahlprüftafel (zinkphosphatiertes Blech) mit 150 Ω Vorwiderstand abgeschieden. Die Abscheidezeit beträgt 2 min bei einer Badtemperatur von 30°C.

Der abgeschiedene Lackfilm wird mit deionisiertem Wasser abgespült und 20 min lang bei 170°C eingebrannt. Die so erhaltenen eingebrannten Lackfilme wurden geprüft.

### 5.3 Ergebnis der Abscheidungen

| **Elektrotauchlackbad** | **0** | **I** | **II** | **III** | **IV** | **V** | **VI** |
|---|---|---|---|---|---|---|---|
| Schichtdicke [µm] | 20,0 | 20,0 | 27,5 | 32,9 | 24,8 | 20,7 | 25,2 |
| bei Spannung [V] | 380 | 330 | 330 | 330 | 350 | 350 | 350 |
| Verlauf *) | 0,5 | 0,5 | 1,0 | 1,5 | 1,0 | 1,0 | 1,0 |
| Erichsentiefung [mm] (DIN 53156) | 6,0 | 7,0 | 8,0 | 9,0 | 9,5 | 8,0 | 8,5 |
| Reverse Impact [inch pound] (ASTM D 2794) | 100 | 100 | 120 | 160 | 160 | 120 | 120 |
| Gitterschnitt *) (DIN 50017) | 2 | 0 | 2 | 0 | 0 | 0 | 0 |
| Biegung [cm] (am konischen Dorn; ISO 6860) | 1 | 1 | 0 | 0 | 0 | 0 | 0 |

| | | | | | | | |
|---|---|---|---|---|---|---|---|
| *) 0 - bester Wert; 5 - schlechtester Wert | | | | | | | |

### Gitterschnitt-Prüfung der Elektrotauchlackbäder

Zur Gitterschnitt-Prüfung werden die elektrotauchlackierten, zinkphosphatierten Stahltafeln mit einem typischen Decklack überlackiert, wobei die aufgetragene Lackschicht separat eingebrannt wird.

Zusammensetzung Zweischichtaufbau:
20 µm Elektrotauchlack
35 µm Einbrenndecklack (Alkyd-Melamin medium-solid, FD72-0782, BASF L+F)

Die angegebenen Schichtdicken verstehen sich als Trockenfilmschichtdicken.

## Patentansprüche

1. Epoxidharze zur Herstellung wasserdispergierbarer Bindemittel für kathodisch abscheidbare Elektrotauchlacke,
**dadurch gekennzeichnet, daß** das Epoxidharz herstellbar ist, indem
a) Polyepoxide mit mindestens einer Glycidgruppe pro Molekül und Phenol-Gruppierungen
b) und ggfs. bis zu 60 Gew.-% bezogen auf das gesamte Epoxidharzreaktionsprodukt aliphatischen und/oder alicyclischen Hydroxylverbindungen mit bevorzugt zwei oder durchschnittlich kleiner zwei - Hydroxylgruppen pro Molekül und einem Molgewicht kleiner 9000 g/mol,
c) in Gegenwart eines Katalysators der Kombination "hartes" Kation - "nicht-nukleophiles" Anion, bestehend aus neutralen Metallsalzen, wie Alkali- und Erdalkali-, Zink- und Nickelsalze der Tetrafluorbor-, Tetrachlorbor-, Hexafluorantimon-, Hexachlorantimon-, Hexafluorphosphor-, Perchlor- und Periodsäure, umgesetzt werden
d) und ein Desaktivierungsmittel zugesetzt wird, welches die Weiterreaktion der Epoxygruppen verhindert oder deren Geschwindigkeit wirksam herabsetzt, sobald die phenolischen Hydroxylgruppen bereits weitgehend abreagiert sind und mindestens noch 0,6 Gew.-% Epoxygruppen bezogen auf das Gesamtgewicht des Epoxidharzreaktionsprodukts vorhanden sind, wobei als Desaktivierungsmittel Metallhydroxide der I. - V. Hauptgruppe und II. - VIII. Nebengruppe des Periodensystems eingesetzt werden.

2. Epoxidharz nach Anspruch 1,
**dadurch gekennzeichnet, daß** es durch Umsetzung mit primären, sekundären und tertiären Aminen modifiziert ist.

3. Epoxidharz nach Anspruch 1 oder 2,
**dadurch gekennzeichnet, daß**
das Polyepoxid (a) ein Epoxidharz mit einer Epoxidäquivalenz größer als 1 und einem mittleren Molekulargewicht von 140 bis 5000 g/eq ist oder gegebenenfalls aus einem Reaktionsprodukt aus einem solchen Epoxidharz und einem Phenol besteht.

4. Epoxidharz nach Anspruch 1-3,
**dadurch gekennzeichnet, daß** als Katalysator (c) Alkali- und Erdalkali-, Zink- und Nickelperchlorate oder - fluoroborate bevorzugt werden, besonders bevorzugt Erdalkali- und Zinkperchlorate.

5. Epoxidharz nach Anspruch 1-4,
**dadurch gekennzeichnet, daß** als Desaktivierungsmittel (d), Metallhydroxide, wie Lithium-, Natrium-, Kalium-, Caesium-, Magnesium-, Calcium-, Strontium-, Barium-, Aluminium-, Zinn-, Blei-, Bismuth-, Zink-, Chromium-, Mangan-, Eisen- und Nickelhydroxid, vorzugsweise Lithium-, Natrium-, Kalium-, Caesium-, Magnesium-, Calcium-, Strontium-, Barium-, besonders bevorzugt Natrium- und Kaliumhydroxid, zugesetzt werden.

6. Epoxidharz nach Anspruch 1-5,
**dadurch gekennzeichnet, daß** von der Komponente (d) 0,5 - 5,0 Mol, vorzugsweise 1,4 - 3,0 Mol Hydroxylgruppen pro eingesetztem Mol Perchlorat, Tetrafluouroborat, des Katalysators (c) zugesetzt werden.

7. Wasserdispergierbare Bindemittel für kathodisch abscheidbare Elektrotauchlacke,
**dadurch gekennzeichnet, daß** sie ein oder mehrere Epoxidharze nach einem der Ansprüche 1-6 enthalten.

8. Kathodisch abscheidbare Elektrotauchlacke,
**dadurch gekennzeichnet, daß** sie die Bindemittel nach Anspruch 7 enthalten.

9. Verfahren zur Herstellung der Epoxidharze nach einem der Ansprüche 1-6 oder der Bindemittel nach Anspruch 7 oder der Elektrotauchlacke nach Anspruch 8,
**dadurch gekennzeichnet, daß** das Epoxidharz hergestellt wird, indem
a) Polyepoxide mit mindestens einer Glycidgruppe pro Molekül und Phenol-Gruppierungen
b) und ggfs. bis zu 60 Gew.-% bezogen auf das gesamte Epoxidharzreaktionsprodukt aliphatischen und/oder alicyclischen Hydroxylverbindungen mit bevorzugt zwei oder durchschnittlich kleiner zwei Hydroxylgruppen pro Molekül und einem Molgewicht kleiner 9000 g/mol,
c) in Gegenwart eines Katalysators der Kombination "hartes" Kation - "nichtnukleophiles" Anion, bestehend aus neutralen Metallsalzen, wie Alkali- und Erdalkali-, Zink- und Nickelsalze der Tetrafluorbor-, Tetrachlorbor-, Hexafluorantimon-, Hexachlorantimon-, Hexafluorphosphor-, Perchlor- und Periodsäure, umgesetzt werden
d) und ein Desaktivierungsmittel zugesetzt wird, welches die Weiterreaktion der Epoxygruppen verhindert oder deren Geschwindigkeit wirksam herabsetzt sobald die phenolischen Hydroxylgruppen bereits weitgehend abreagiert sind und mindestens noch 0,6 Gew.-% Epoxygruppen bezogen auf das Gesamtgewicht des Epoxidharzreaktionsprodukts vorhanden sind, wobei als Desaktivierungsmittel Metallhydroxide der I. - V. Hauptgruppe und II. - VIII. Nebengruppe des Periodensystems eingesetzt werden.

10. Verfahren zum Lackieren elektrisch leitfähiger Substrate, bei dem
(1) das elektrisch leitfähige Substrat in einen wäßrigen Elektrotauchlack getaucht wird,
(2) das Substrat als Kathode geschaltet wird,
(3) durch Gleichstrom ein Film auf dem Substrat abgeschieden wird,
(4) das lackierte Substrat aus dem Elektrotauchlack entfernt wird und
(5) der abgeschiedene Lackfilm eingebrannt wird,
**dadurch gekennzeichnet, daß** in Stufe (1) des Verfahrens ein Elektrotauchlack gemäß Anspruch 8 eingesetzt wird.

11. Verwendung des Epoxidharzes nach Anspruch 1-6 oder des Bindemittels nach Anspruch 7 zur Herstellung von kathodisch abscheidbaren Elektrotauchlacken.

12. Verwendung des Elektrotauchlackes nach Anspruch 8 zum Lackieren elektrisch leitfähiger Substrate, vorzugsweise Metalle.

## Claims

1. Epoxy resins for preparing water-dispersible binders for cathodically depositable electrodeposition coating materials,
**characterized in that** the epoxy resin can be prepared by reacting
a) polyepoxides having at least one glycidyl group per molecule and phenol groups
b) and, optionally, up to 60% by weight, based on the overall epoxy resin reaction product, of aliphatic and/or alicyclic hydroxy compounds having preferably two or on average less than two hydroxyl groups per molecule and a molecular weight of less than 9000 g/mol,
c) in the presence of a catalyst comprising the combination of "hard" cation with "nonnucleophilic" anion and consisting of neutral metal salts, such as alkali metal salts and alkaline earth metal salts, zinc salts and nickel salts of tetrafluoroboric, tetrachloroboric, hexafluoroantimonic, hexachloroantimonic, hexafluorophosphoric, perchloric and periodic acid, and
d) adding a deactivating agent which prevents the epoxy groups reacting further or effectively reduces the rate of such reaction as soon as the phenolic hydroxyl groups have already substantially reacted and at least 0.6% by weight of epoxy groups are still present, based on the overall weight of the epoxy resin reaction product, the deactivating agents employed being metal hydroxides of main groups I - V and subgroups II - VIII of the Periodic Table.

2. Epoxy resin according to Claim 1, **characterized in that** it is modified by reacting it with primary, secondary and tertiary amines.

3. Epoxy resin according to Claim 1 or 2, **characterized in that** the polyepoxide (a) is an epoxy resin having an epoxy equivalence of more than 1 and an average molecular weight of from 140 to 5000 g/eq or, optionally, consists of a reaction product of such an epoxy resin and a phenol.

4. Epoxy resin according to Claim 1-3, **characterized in that** preference is given as catalyst (c) to alkali metal and alkaline earth metal, zinc and nickel perchlorates or fluoroborates, particularly preferably alkaline earth metal and zinc perchlorates.

5. Epoxy resin according to Claim 1-4, **characterized in that** addition is made as deactivating agent (d) of metal hydroxides, such as lithium, sodium, potassium, cesium, magnesium, calcium, strontium, barium, aluminium, tin, lead, bismuth, zinc, chromium, manganese, iron and nickel hydroxide, preferably lithium, sodium, potassium, cesium, magnesium, calcium, strontium, barium hydroxide, particularly preferably sodium and potassium hydroxide.

6. Epoxy resin according to Claim 1-5, **characterized in that** 0.5 - 5.0 mol, preferably 1.4 - 3.0 mol of hydroxyl groups are added of the component (d) per mole of perchlorate, tetrafluoroborate of the catalyst (c) employed.

7. Water-dispersible binder for cathodically depositable electrodeposition coating materials, **characterized in that** it comprises one or more epoxy resins according to any one of Claims 1-6.

8. Cathodically depositable electrodeposition coating material,
**characterized in that** it comprises a binder according to Claim 7.

9. Process for preparing an epoxy resin according to any one of Claims 1-6 or for preparing a binder according to Claim 7 or for preparing an electrodeposition coating material according to Claim 8,
**characterized in that** it comprises preparing the epoxy resin by reacting
a) polyepoxides having at least one glycidyl group per molecule and phenol groups
b) and, optionally, up to 60% by weight, based on the overall epoxy resin reaction product, of aliphatic and/or alicyclic hydroxy compounds having preferably two or on average less than two hydroxyl groups per molecule and a molecular weight of less than 9000 g/mol,
c) in the presence of a catalyst of the combination of "hard" cation with "nonnucleophilic" anion and consisting of neutral metal salts, such as alkali metal salts and alkaline earth metal salts, zinc salts and nickel salts of tetrafluoroboric, tetrachloroboric, hexafluoroantimonic, hexachloroantimonic, hexafluorophosphoric, perchloric and periodic acid, and
d) adding a deactivating agent which prevents the epoxy groups reacting further or effectively reduces the rate of such reaction as soon as the phenolic hydroxyl groups have already substantially reacted and at least 0.6% by weight of epoxy groups are still present, based on the overall weight of the epoxy resin reaction product, the deactivating agents employed being metal hydroxides of main groups I - V and subgroups II - VIII of the Periodic Table.

10. Method of coating electrically conductive substrates, where
(1) the electrically conductive substrate is immersed in an aqueous electrodeposition coating material,
(2) the substrate is connected as cathode,
(3) by means of direct current, a film is deposited on the substrate,
(4) the coated substrate is removed from the electrodeposition coating material, and
(5) the deposited coating film is stoved,
**characterized in that** in step (1) of the method an electrodeposition coating material according to Claim 8 is employed.

11. Use of the epoxy resin according to Claim 1-6 or the binder according to Claim 7 for preparing cathodically depositable electrodeposition coating materials.

12. Use of the electrodeposition coating material according to Claim 8 for coating electrically conductive substrates, preferably metals.

## Revendications

1. Résines époxy pour la préparation de liants dispersables dans l'eau, pour des peintures pour électrodéposition aptes au dépôt cathodique, **caractérisées en ce qu'**il est possible de préparer la résine époxy en faisant réagir
a) des polyépoxydes comportant au moins un groupe glycidyle par molécule, et des groupes phénol,
b) et éventuellement jusqu'à 60% en poids, par rapport au produit total de réaction de type résine époxy, de composés hydroxylés aliphatiques et/ou alicycliques ayant de préférence deux ou en moyenne moins de deux groupes hydroxy par molécule et une masse moléculaire inférieure à 9 000 g/mole,
c) en présence d'un catalyseur de la combinaison cation "dur" - anion "non nucléophile", constitué de sels métalliques neutres, tels que des sels alcalins et alcalino-terreux, de zinc et de nickel, de l'acide tétrafluoroborique, tétrachloroborique, hexafluoroantimonique, hexachloroantimonique, hexafluorophosphorique, perchlorique ou periodique,
d) et en ajoutant un inactivateur qui empêche la poursuite de la réaction des groupes époxy, ou diminue efficacement sa vitesse, dès que les groupes hydroxy phénoliques ont déjà dans une large mesure fini de réagir et au moins 0,6% en poids des groupes époxy, par rapport au poids total du produit de réaction de type résine époxy, sont encore présents, et en utilisant comme inactivateur des hydroxydes de métaux des groupes I.-V. et II.-VIII. du tableau périodique des éléments.

2. Résine époxy selon la revendication 1, **caractérisée en ce qu'**elle est modifiée par réaction avec des amines primaires, secondaires et tertiaires.

3. Résine époxy selon la revendication 1 ou 2, **caractérisée en ce que** le polyépoxyde (a) est une résine époxy ayant un équivalent de groupes époxy supérieur à 1 et une masse moléculaire moyenne de 140 à 5 000 g/Eq ou éventuellement consiste en un produit de réaction d'une telle résine époxy et d'un phénol.

4. Résine époxy selon l'une quelconque des revendications 1 à 3, **caractérisée en ce qu'**on préfère en tant que catalyseur (c) des perchlorates ou fluoroborates de métaux alcalins et alcalino-terreux, de zinc et de nickel, en particulier les perchlorates de métaux alcalino-terreux et de zinc.

5. Résine époxy selon l'une quelconque des revendications 1 à 4, **caractérisée en ce qu'**on ajoute en tant qu'inactivateur (d) des hydroxydes de métaux, tels que les hydroxydes de lithium, sodium, potassium, césium, magnésium, calcium, strontium, baryum, aluminium, étain, plomb, bismuth, zinc, chrome, manganèse, fer et nickel, de préférence les hydroxydes de lithium, sodium, potassium, césium, magnésium, calcium, strontium, baryum, de façon particulièrement préférée l'hydroxyde de sodium et l'hydroxyde de potassium.

6. Résine époxy selon l'une quelconque des revendications 1 à 5, **caractérisée en ce qu'**on ajoute 0,5-5,0 mole, de préférence 1,4-3,0 mole de groupes hydroxy du composant (d), par mole utilisée de perchlorate, tétrafluoroborate, du catalyseur (c).

7. Liants dispersables dans l'eau pour peintures pour électrodéposition aptes au dépôt cathodique, **caractérisés en ce qu'**ils contiennent une ou plusieurs résines époxy selon l'une quelconque des revendications 1 à 6.

8. Peintures pour électrodéposition aptes au dépôt cathodique, **caractérisées en ce qu'**elles contiennent les liants selon la revendication 7.

9. Procédé pour la préparation des résines époxy selon l'une quelconque des revendications 1 à 6 ou des liants selon la revendication 7 ou des peintures pour électrodéposition selon la revendication 8, **caractérisé en ce qu'**on prépare la résine époxy en faisant réagir
a) des polyépoxydes comportant au moins un groupe glycidyle par molécule, et des groupes phénol,
b) et éventuellement jusqu'à 60% en poids, par rapport au produit total de réaction de type résine époxy, de composés hydroxylés aliphatiques et/ou alicycliques ayant de préférence deux ou en moyenne moins de deux groupes hydroxy par molécule et une masse moléculaire inférieure à 9 000 g/mole,
c) en présence d'un catalyseur de la combinaison cation "dur" - anion "non nucléophile", constitué de sels métalliques neutres, tels que des sels alcalins et alcalino-terreux, de zinc et de nickel, de l'acide tétrafluoroborique, tétrachloroborique, hexafluoroantimonique, hexachloroantimonique, hexafluorophosphorique, perchlorique ou periodique,
d) et en ajoutant un inactivateur qui empêche la poursuite de la réaction des groupes époxy, ou diminue efficacement sa vitesse, dès que les groupes hydroxy phénoliques ont déjà dans une large mesure fini de réagir et au moins 0,6% en poids des groupes époxy, par rapport au poids total du produit de réaction de type résine époxy, sont encore présents, et en utilisant comme inactivateur des hydroxydes de métaux des groupes I.-V. et II.-VIII. du tableau périodique des éléments.

10. Procédé pour le peinturage de supports conducteurs de l'électricité, dans lequel
(1) le support conducteur de l'électricité est immergé dans une peinture à l'eau pour électrodéposition,
(2) le support est connecté en tant que cathode,
(3) un feuil est déposé sur le support par un courant continu,
(4) le support laqué est retiré de la peinture pour électrodéposition et
(5) le feuil de peinture déposé est cuit au four,
**caractérisé en ce qu'**on utilise dans l'étape (1) du procédé une peinture pour électrodéposition selon la revendication 8.

11. Utilisation de la résine époxy selon l'une quelconque des revendications 1 à 6 du du liant selon la revendication 7, pour la préparation de peintures pour électrodéposition aptes au dépôt cathodique.

12. Utilisation de la peinture pour électrodéposition selon la revendication 8, pour le peinturage de supports conducteurs de l'électricité, de préférence de métaux.
